**Europäisches Patentamt**

**European Patent Office**

**Office européen des brevets**

(19)

(11) Veröffentlichungsnummer: **0 101 029**

**A1**

(12) # EUROPÄISCHE PATENTANMELDUNG

(21) Anmeldenummer: **83107740.9**

(22) Anmeldetag: **05.08.83**

(51) Int. Cl.³: **B 23 P 19/00**

(30) Priorität: **09.08.82 DE 3229643**

(43) Veröffentlichungstag der Anmeldung:
**22.02.84 Patentblatt 84/8**

(84) Benannte Vertragsstaaten:
**AT BE CH DE FR GB IT LI LU NL SE**

(71) Anmelder: **Viertel, Christian**
**Kiebitzweg 22**
**D-8013 Haar(DE)**

(72) Erfinder: **Viertel, Christian**
**Kiebitzweg 22**
**D-8013 Haar(DE)**

(74) Vertreter: **Fehners, Klaus Friedrich, Dipl.-Ing.**
**Dipl.-Wirtsch.-Ing. et al,**
**Patentanwälte Dipl.-Ing. A. Wedde Dipl.-Ing. K. Empl**
**Dipl.-Ing., Dipl.-Wirtsch.-Ing. K. Fehners**
**Schumannstrasse 2**
**D-8000 München 80(DE)**

(54) **Verfahren und Vorrichtung zum Einbringes eines, von einem Vorrat bereitgestellten Folienabschnittes in einen offenen Hohlraum eines Werkstückes.**

(57) Es wird ein Verfahren und eine Vorrichtung zum Einbringen eines, von einem Vorrat bereitgestellten Folienabschnittes in einen offenen Hohlraum eines Werkstückes geschaffen, wobei ein, den Innenabmessungen des Werkstückes angepaßter Rollkopf 18, welcher um seine Rotationsachse 46 drehbar, in deren Längsrichtung verschieblich gelagert und an einem horizontal schwenkbaren Haltearm 25 gehalten ist, den von einer Folien-Bevorratungs-Einheit bereitgestellten Folienabschnitt greift, durch Drehen um seine Vertikalachse 46 den Folienabschnitt auf einem an seinem Außenumfang besonders ausgebildeten Aufnahme-Bereich aufnimmt und mittels geeigneter Haltemittel hält, anschließend von dem Haltearm 25 über das Werkstück geschwenkt und in den darin befindlichen, mit dem Folienabschnitt zu versehenden Hohlraum durch Absenken in seiner Vertikalachse 46 eingeführt wird, sich mit dem an seinem Außenumfang ausgebildeten Aufnahme-Bereich aufliegenden Ende des Folienabschnittes gegen den Anfangsteil des mit dem Folienabschnitt zu versehenden Teiles der Wandung des Hohlraumes des Werkstückes andrückt und zurückdrehend den Folienabschnitt durch Abrollen an der Wandung auf dieselbe anlegt und in den Hohlraum einbringt, anschließend aus dem Werkstück herausgezogen und wieder auf die Folien-Bevorratungs-Einheit zugeschwenkt wird.

FIG:1

Beschreibung.

Verfahren und Vorrichtung zum Einbringen eines,
von einem Vorrat bereitgestellten Folienabschnittes
in einen offenen Hohlraum eines Werkstückes.

Die Erfindung betrifft ein Verfahren zum Einbringen eines, von
einem Vorrat bereitgestellten Folienabschnittes in einen offenen
Hohlraum eines Werkstückes, insbesondere eines bandförmigen
Folienabschnittes in eine, in einem zylindrischen Hohlkörper angeordnete, im Querschnitt rechteckige Ringnut sowie eine Vorrichtung zur Durchführung des erfindungsgemäßen Verfahrens.

Bei der Herstellung von Werkstücken für Maschinen und Apparate,
Automobile und anderen Gerätschaften stellt sich häufig die
Aufgabe, Folien bzw. Folienabschnitte bestimmter Länge und Breite
in im Werkstück vorgesehene Hohlkörper einzusetzen bzw. einzukleben.
Diese Aufgabe kann sich noch weiterhin dadurch erschweren, daß
beispielsweise ein solcher Folienabschnitt in eine, in den Abmessungen entsprechende Ausnehmung in einem solchen Hohlraum
eingesetzt werden soll.

Diese Folien bzw. Folienabschnitte werden, auch bei Serienproduktion, fast ausschließlich in Handarbeit in die Werkstücke eingebracht, allenfalls unter Zuhilfenahme von Handwerkzeugen bzw. Handmaschinen.

Die Erfindung hat sich die Aufgabe gestellt, von einem Vorrat bereitgestellte Folien bzw. Folienabschnitte in einen offenen Hohlraum eines Werkstückes mittels einer vollautomatisierten bzw. automatisierbaren Vorrichtung im Rahmen einer Fließband-Produktion einzubringen. Diese Aufgabe wird durch ein Verfahren der eingangs genannten Art dadurch gelöst, daß ein, den Innenabmessungen des Werkstückes angepaßter Rollkopf, welcher um seine Rotationsachse drehbar, in deren Längsrichtung verschieblich gelagert und an einem horizontal schwenkbaren Haltearm gehalten ist, den von einer Folien-Bevorratungs-Einheit bereitgestellten Folienabschnitt greift, durch Drehen um seine Vertikalachse den Folienabschnitt auf einem an seinem Außenumfang besonders ausgebildeten Aufnahme-Bereich aufnimmt und mittels geeigneter Haltemittel hält, anschließend von dem Haltearm über das Werkstück geschwenkt und in den darin befindlichen, mit dem Folienabschnitt zu versehenden Hohlraum durch Absenken in seiner Vertikalachse eingeführt wird, sich mit dem an seinem Außenumfang ausgebildeten Aufnahme-Bereich aufliegenden Ende des Folienab-

- 3 -

schnittes gegen den Anfangsteil des mit dem Folienabschnitt zu versehenden Teiles der Wandung des Hohlraumes des Werkstückes andrückt und zurückdrehend den Folienabschnitt durch Abrollen an der Wandung auf dieselbe anlegt und in den Hohlraum einbringt, anschließend aus dem Werkstück herausgezogen und wieder auf die Folien-Bevorratungs-Einheit zugeschwenkt wird.

Die entsprechende Vorrichtung zur Durchführung dieses Verfahrens ist dadurch gekennzeichnet, daß an dem freien Ende eines, an einer Stütze um eine ortsfeste Achse horizontal schwenkbar angeordneten Haltearmes eine vertikal arbeitende Hubvorrichtung vorgesehen ist, welche an ihrem unteren Ende einen, dem Innendurchmesser des Werkstückes angepaßten Rollkopf aufweist, der um seine Längsachse drehbar ist, daß benachbart zum Schwenkbereich des Rollkopfes eine Folien-Bevorratungs-Einheit mit bereitgehaltenen Folienabschnitten vorgesehen ist, welche die Folienabschnitte an den sich in seiner höchsten Stellung befindlichen Rollkopf heranführt, daß der Rollkopf einen an seinem Außenumfang besonders ausgebildeten Aufnahme-Bereich und Haltemittel aufweist, welche den zugeführten Folienabschnitt aufnehmen und bis zur anschließenden Einbringung im vorgesehenen Bereich des Werkstückes hält und daß das Werkstück in einer drehbaren Aufnahmevorrichtung eingesetzt ist.

- 4 -

- 4 -

Vorstehend beschriebenes Verfahren und die geschilderte Vorrichtung zur Durchführung desselben erlauben die vollautomatische Einbringung von Folien bzw. Folienabschnitten in Hohlräume von Werkstücken, insbesondere kann durch die Zuordnung der einzelnen, zusammenarbeitenden Einheiten, nämlich der Folien-Bevorratungs-Einheit, dem horizontal und vertikal verfahrbaren Rollkopf sowie dem Werkstück, eine Serien- bzw. Fließband-Produktion eingerichtet werden.

Im Rahmen des vorstehend geschilderten Verfahrens stellt sich die spezielle Aufgabe, einen bandförmigen, von einem Endlos-Vorrat bereitgestellten Folienabschnitt genau in einen zylindrischen Hohlraum eines Werkstückes einzubringen, welcher so genau abgelängt ist, daß Anfang und Ende des Folienabschnittes unmittelbar aneinander zu liegen kommen, wobei die Längskanten des Anfanges und des Endes des Folienabschnittes keinesfalls gegeneinander versetzt sein dürfen.

Diese Aufgabe wird ergänzend zu dem vorstehend geschilderten Verfahren dadurch gelöst, daß ein bandförmig ausgebildeter Folienabschnitt von einem in der Folien-Bevorratungs-Einheit bereitgestellten endlosen Vorrat an Folienband abgezogen, von einer dem Folien-Vorrat nach- und dem Rollkopf unmittelbar vorgeordneten Folienband-Schneid-Einheit auf eine vorbestimmte Länge abgelängt

-5-

und von dem Rollkopf in eine, in der Wandung eines zylindrischen Hohlraumes eines Werkstückes angeordnete, im Querschnitt rechteckige in einer, zur Längsachse senkrechten Durchmesserebene des Hohlraumes liegenden Ringnut eingebracht wird.

Erfindungsgemäß wird das mit einer Klebeschicht auf einer Trägerschicht aufgebrachte Folienband von dem auf einer ersten Haspel liegenden Folienband-Vorrat durch den von einer motorisch angetriebenen zweiten Haspel verursachten Vortrieb um eine Umlenkrolle herumgeführt und dabei tangential von der Trägerschicht abgelöst, von einer der Umlenkrolle nachgeschalteten Saugbacke mittels darin erzeugten Vakuums gehalten und auf den Rollkopf zugeführt.

Die Verwendung einer, auf einer Trägerschicht bereitgestellten selbstklebenden Folie sowie die Anordnung einer, das abgelöste Folienband mittels Vakuums an seiner Rückseite haltenden Saugbacke erlaubt ein gezieltes Zuführen des Anfangs des Folienbandes zum herangeschwenkten Rollkopf. Durch das senkrecht zur Folienband-Oberfläche wirkende Vakuum ist der Vortransport des Folienbandes nicht beeinträchtigt.

In erfindungsgemäßer Weiterbildung wird der Anfang des Folienbandes von der Saugbacke in einen, in dem für die Aufnahme des Folienbandes besonders ausgebildeten Aufnahme-Bereich des gegen-

überliegenden Rollkopfes vorgesehene, radial in das Innere des Rollkopfes führenden Sackschlitz eingeführt und von einem darin angeordneten Klemmstück gehalten.

Durch die Anordnung des Sackschlitzes, welcher unterschiedlich tief sein kann, wird ein Teil des abgelängten Folienband-Abschnittes aufgenommen, während das übrige Ende des Folienbandes auf dem Rollkopf außen in dem besonders ausgebildeten Aufnahme-Bereich angeordnet ist. Hierdurch wird erreicht, daß der Rollkopf in seinen Außenabmessungen wesentlich kleiner gehalten werden kann, obwohl die Länge des aufzubringenden Folienband-Abschnittes der Gesamtlänge der mit der Folie zu versehenden Fläche im Werkstück entsprechen muß.

Erfindungsgemäß wird das Folienband durch Drehen des Rollkopfes weiter von dem Folienband-Vorrat an der Umlenkrolle vorbei abgezogen, wobei sich das Folienband von der Saugbacke löst, sich auf dem auf dem Rollkopf ausgebildeten Aufnahme-Bereich kontinuierlich auflegt und, nachdem der längenmäßig bestimmte Folienband-Abschnitt von dem Folienband durch die dem Rollkopf vorgeordnete Folienband-Schneid-Einheit abgelängt wurde, wieder von der nachgeführten Saugbacke gehalten wird.

Vorteilhaft wird das Ende des Folienband-Abschnittes nach Trennung von dem Folienband durch die Folienband-Schneid-Einheit mittels angeblasener Luft auf den Aufnahme-Bereich des Rollkopfes angedrückt.

Der auf den Aufnahme-Bereich des Rollkopfes aufliegende Folienband-Abschnitt wird von einem in diesem Bereich erzeugten Vakuum gehalten.

Erfindungsgemäß wird der in den Hohlraum des Werkstücks eingeführte Rollkopf mit dem Teil seiner den Folienband-Abschnitt haltenden Aufnahme-Bereich in die für die Aufnahme des Folienband-Abschnittes vorgesehene Ringnut des Werkstückes gedrückt, auf welchem das Ende des Folienband-Abschnittes liegt und durch zur Drehung des Rollkopfes bei der Aufnahme des Folienband-Abschnittes entgegengesetztes Drehen des Werkstückes mit seinem Aufnahme-Bereich in der Ringnut abläuft und den Folienband-Abschnitt kontinuierlich in diese einbringt, wobei das Klemmstück gelöst ist und der ursprünglich Anfang des Folienband-Abschnittes aus dem Sackschlitz herausgleiten und sich in die Ringnut einlegen kann.

Vorteilhaft wird der Rollkopf mehrfach durch Drehen des Werkstückes an dessen Wandung abgerollt und damit der aufgebrachte Folien-Abschnitt fester an- und/oder glattgedrückt.

Das vorstehend geschilderte Verfahren erlaubt erstmals das fließbandmäßige Versehen von in Werkstücken vorgesehenen Hohlräumen
mit Folien bzw. Folienband-Abschnitten, wobei insbesondere Wert
auf eine paßgenaue Einbringung der Folie gelegt wird.

Die oben bereits beschriebene Vorrichtung zur Durchführung des
geschilderten Verfahrens ist insbesondere dadurch gekennzeichnet,
daß der Folienabschnitt bandförmig ausgebildet und in einem in
der Folien-Bevorratungs-Einheit angeordneten Folienband-Vorrat
bereitgestellt ist und daß das Folienband mit einer selbstklebenden Schicht auf einer Trägerschicht aufgebracht ist.

Weitere Einzelheiten und Vorteile ergeben sich aus den Kennzeichen der Ansprüche 13 bis 34.

Ein die Erfindung nicht beschränkendes Ausführungsbeispiel einer
Vorrichtung zur Durchführung des Verfahrens zum Einbringen eines,
von einem Vorrat bereitgestellten, bandförmigen Folienabschnittes
in eine, in der Wandung eines zylindrischen Hohlraumes eines Werkstückes angeordnete, im Querschnitt rechteckig ausgebildete, in
einer zur Längsachse senkrechten Durchmesserebene des Hohlraumes
liegenden Ringnut wird anhand der nachfolgend erläuterten
Figuren beschrieben.

Es zeigen

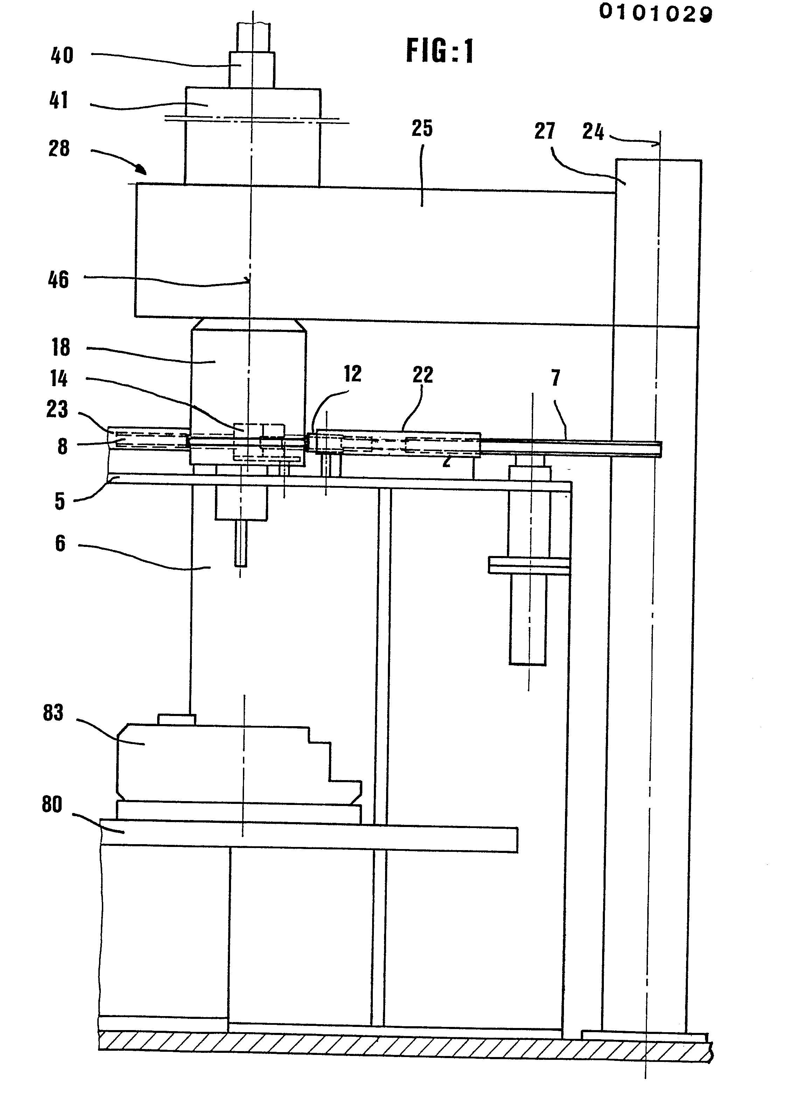

Fig. 1:     eine teilweise Seitenansicht der Gesamtvorrichtung,

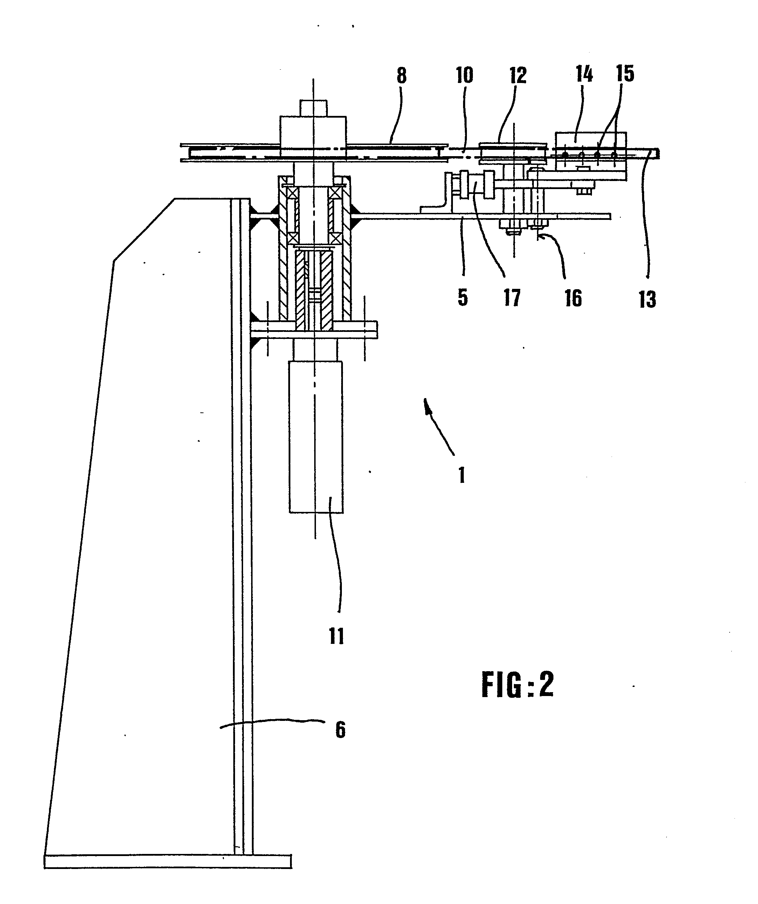

Fig. 2:     eine Seitenansicht der Folienband-Bevorratungs-Einheit,

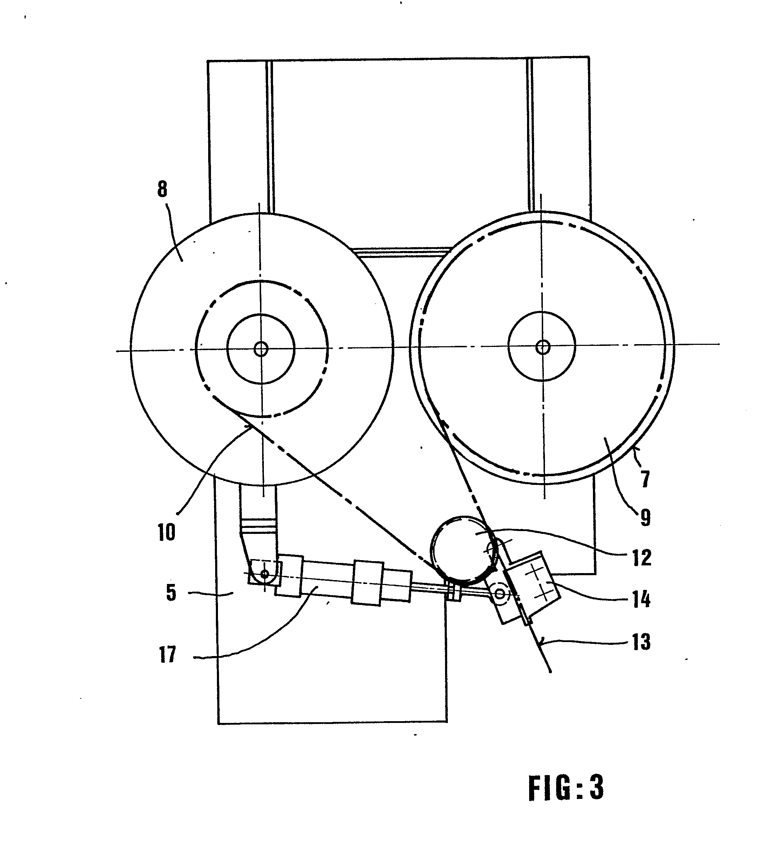

Fig. 3:     eine Draufsicht auf die Folienband-Bevorratungs-Einheit,

Fig. 4:     eine teilweise Draufsicht auf die Folienband-Bevorratungs-Einheit, die Folienband-
            Schneid-Einheit sowie einen Horizontalschnitt durch den Rollkopf,

Fig. 5:     eine den Folienband-Abzug darstellende Skizze
            der Vorrichtung gemäß Fig. 4,

Fig. 6:     eine der Fig. 4 entsprechende Darstellung bei
            geschlossener Stellung der Schneidvorrichtung,

.

Fig. 7: eine teilweise geschnittene Seitenansicht der in Fig. 4 bis Fig. 6 dargestellten Vorrichtung,

Fig. 8: eine teilweise geschnittene Seitenansicht der Rollkopf-Einheit,

Fig. 9: einen Längsschnitt durch das untere Ende der Hubvorrichtung und des Rollkopfes,

Fig. 10: einen teilweisen Schnitt durch den Rollkopf mit Kipphebel gemäß Linie X-X in Fig. 11,

Fig. 11: einen Querschnitt durch den Rollkopf mit Kipphebel gemäß Linie XI-XI in Fig. 10,

Fig. 12: einen Längsschnitt durch die Hubvorrichtung und den Rollkopf mit Kipphebel in angehobener Stellung,

Fig. 13: Längsschnitt durch die Hubvorrichtung mit nicht geschnitten dargestelltem Hubkolben und Rollkopf in abgesenkter Stellung und mit Längsschnitt durch das Werkstück und die Aufnahmevorrichtung,

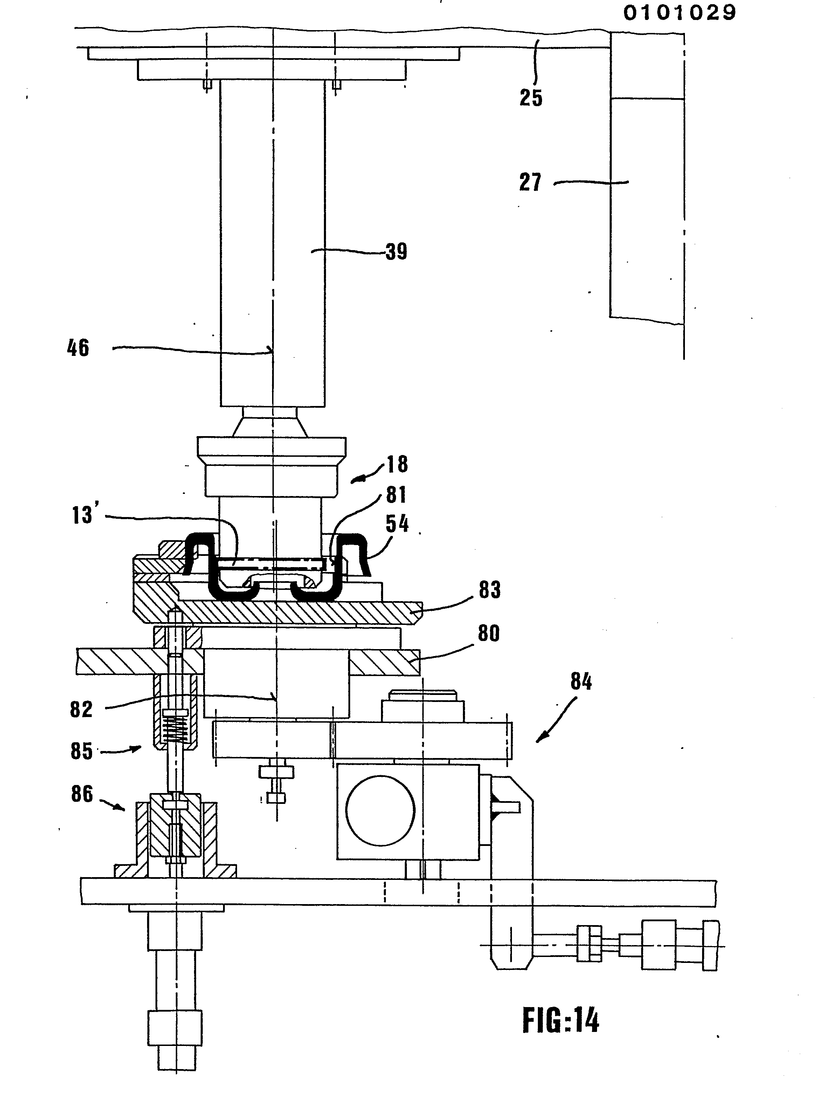

Fig. 14:   Längsschnitt durch Aufnahmevorrichtung mit eingesetztem Werkstück, Drehtisch und Darstellung
          des Antriebes und der Verriegelungsvorrichtung,

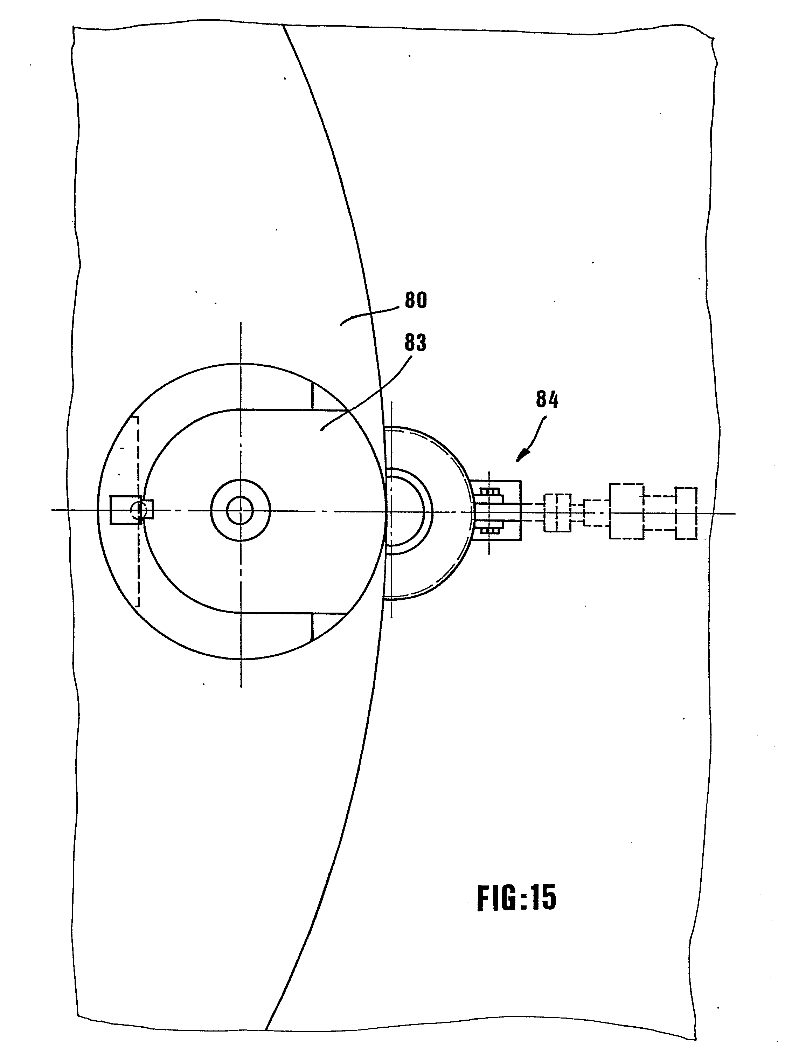

Fig. 15:   teilweise Draufsicht auf den Drehtisch mit
          Aufnahmevorrichtung und Antriebsvorrichtung,

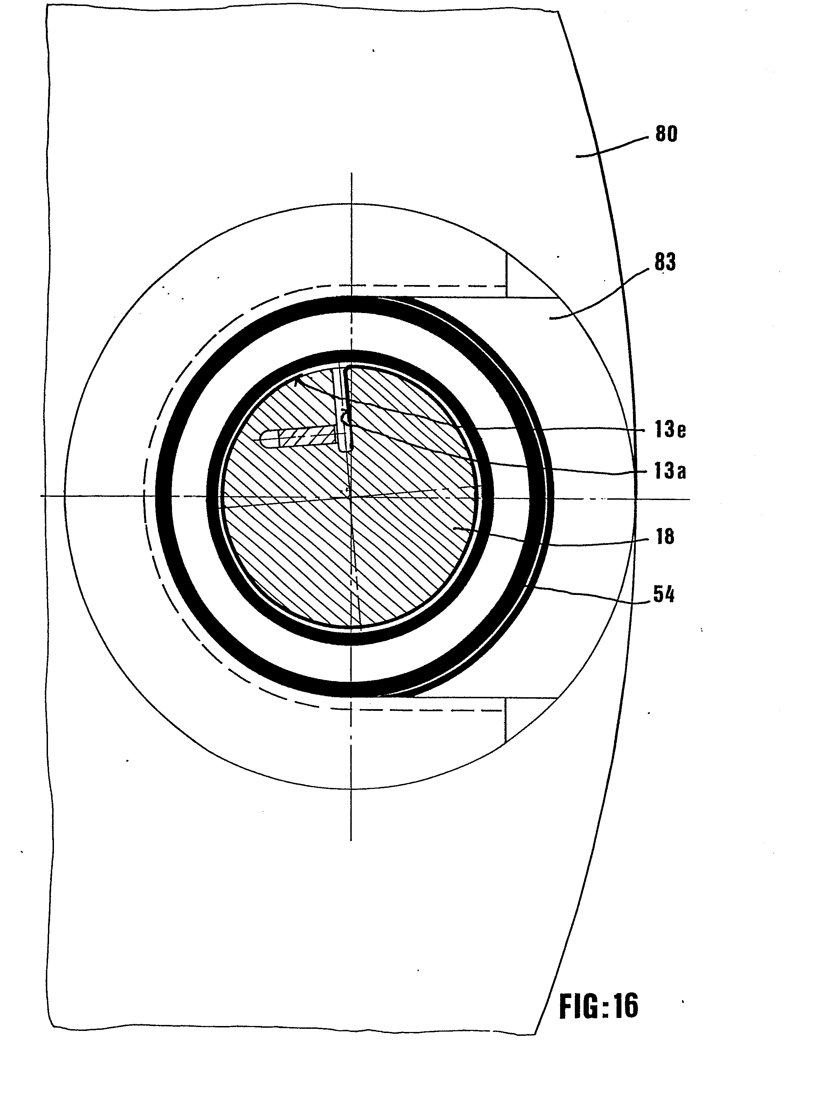

Fig. 16:   Draufsicht auf das in der Aufnahmevorrichtung
          eingesetzte Werkstück mit Querschnitt des eingeführten Rollkopfes,

Fig. 17:   Darstellung wie in Fig. 16, jedoch mit Querschnitt durch den Rollkopf in angedrückter
          Anfangsstellung,

Fig. 18:   Darstellung wie in Fig. 17, jedoch in vorgerückter Arbeitsstellung.

Die in den einzelnen Figuren dargestellte Vorrichtung kann funktionell in vier zusammenwirkende Baugruppen unterteilt werden, nämlich
in eine Folienband-Bevorratungs-Einheit 1, eine Folienband-Schneid-
Einheit 2, eine Rollkopf-Einheit 3 und eine Werkstück-Transport-
Einheit 4, von denen Folienband-Bevorratungs-Einheit 1 und die Folienband-Schneid-Einheit 2 auf einer gemeinsamen Konsole 5 montiert sind, welche wiederum an einer, in ihrer Höhe an der Rollkopf-Einheit 3 und der Werkstück-Transport-Einheit 4 ausgerichteten Stütze 6 befestigt ist.

Die Folienband-Bevorratungs-Einheit 1 besteht im wesentlichen aus zwei horizontal gelagerten, in einem Abstand nebeneinander angeordneten Haspeln 7 bzw. 8, von denen Haspel 7 den Vorrat 9 des auf einer Trägerschicht 10 mit seiner Klebeschicht aufgebrachten Folienbandes 13 aufnimmt und Haspel 8 die Trägerschicht 10 nach Abzug von dem Folienband 13 wieder aufnimmt und gleichzeitig mittels eines Antriebes 11 den Vortrieb des Folienbandes 13 bewirkt.

Nach Abzug des Folienbandes 13 von dem auf der Haspel 7 liegenden Vorrat 9 wird es um eine Umlenkrolle 12 herumgeführt, wobei sich Folienband 13 von der Trägerschicht 10 ablöst und tangential von der Umlenkrolle 12 geradeaus von einer das Folienband 13 aufnehmenden und haltenden Saugbacke 14 an die nachstehend beschriebene Rollkopf-Einheit 3 herangeführt wird.

Die Saugbacke 14 weist mehrere, in der Mittelachslinie der Folienband-Führungsbahn angeordnete Saugöffnungen 15 auf, in welchen ein Vakuum herrscht und das Folienband 13 hält.

Die Saugbacke 14 kann mittels eines Zylinders 17 um eine auf der Konsole 5 angeordnete vertikale Achse 16 geschwenkt werden.

Die Rollkopf-Einheit 3 hält einen, für die Aufnahme und den Transport des Folienband-Abschnittes vorgesehenen Rollkopf 18 unmittelbar benachbart zur Saugbacke 14 und in vorbestimmter Höhe an die Folienband-Bevorratungs-Einheit 1 geschwenkt. Im Rollkopf 18 ist ein, für die Aufnahme des Anfanges 13 a des Folienband-Abschnittes 13 bestimmter Sackschlitz 19 mit einem Klemmstück 20, welche weiter unten beschrieben werden, vorgesehen, darüber hinaus weist der Rollkopf 18 in Höhe seiner, für die Aufnahme des Folienband-Abschnittes 13 vorgesehene Außenfläche verteilte Radial-Bohrungen 21 auf, welche ebenfalls weiter unten beschrieben werden.

Die Folienband-Schneid-Einheit 2 weist im wesentlichen zwei Schneid-Werkzeuge 22 bzw. 23 auf, welche gegeneinander horizontal verschiebbar ausgebildet und unmittelbar benachbart zur Saugbacke 14 bzw. dem herangeschwenkten Rollkopf 18 angeordnet sind. Das Schneidwerkzeug 23 weist weiterhin eine, der zylindrischen Außenfläche des Rollkopfes 18 entsprechend ausgebildete Anblasfläche 23' auf, in welcher in den Figuren nicht dargestellte Anblaslöcher vorgesehen sind.

Der Rollkopf 18 ist Teil der Rollkopf-Einheit 3, welche an einem, um eine vertikale Achse 24 schwenkbaren Arm 25 gehalten ist. Die Schwenkung des Armes 25 um die Achse 24 wird beispielsweise durch einen nicht dargestellten, horizontal angeordneten Zylinder bewirkt, welcher mit seinem einen Ende am Arm 25 und mit seinem anderen Ende an der die Rollkopf-Einheit 3 haltenden Säule 27 befestigt ist.

Haltearm 25 ist als Hohlkasten ausgebildet und weist an seinem freien Ende 28 im Obergurt 29 und im Untergurt 30 zwei koaxial übereinander liegende Bohrungen 31 und 32 mit darin eingesetzten Lagerringen 33 bzw. 34 auf, welche wiederum konzentrische Lagerbohrungen aufweisen. Lagerringe 33 bzw. 34 sind im Querschnitt im wesentlichen rechtwinklig ausgebildet und liegen mit ihren radial nach außen weisenden Schenkeln 33' bzw. 34' auf der jeweiligen Oberfläche des Ober- bzw. Untergurtes 29 bzw. 30 an und ragen mit ihren axialen Schenkeln 33" bzw. 34" in das Innere des Haltearmes 25 und enden in einem Abstand voneinander.

In diese Lagerringe 33 bzw. 34 ist ein im wesentlichen hohlzylindrisch ausgebildetes Lager 35 eingesetzt, welches einen radial nach außen stehenden und mittig angeordneten Zahnkranz 36 aufweist, der zwischen den Enden der axialen Schenkel 33" bzw.34" der beiden Lagerringe 33 bzw. 34 nach außen hervorsteht und über ein Zahnrad 37 mit einem Antriebs-Zylinder 26 in Verbindung steht und in Drehung versetzt werden kann.

Das Lager 35 weist auf seiner, mit der kreisringförmigen Stirnfläche des radialen Schenkels 34' des Lagerringes 34 eine Ebene bildenden unteren Ring-Stirnfläche zwei vertikal nach unten vorstehende Mitnehmerstifte 38 auf, deren Funktion weiter unten beschrieben ist.

In der zylindrischen Öffnung des Lagers 35 ist eine als hohlzylindrisches Rohr ausgebildete Hubvorrichtung 39 angeordnet, welche mittels eines, auf einem, die Hubvorrichtung 39 schützend umgebendes Gehäuse 41 montierten Hubzylinders 40 in ihrer Längsrichtung verschoben werden kann. In dem geschlossenen Innenraum 42 der Hubvorrichtung 39 kann über eine Zuleitung 43 eine Druckdifferenz gegenüber der Außenluft hergestellt werden.

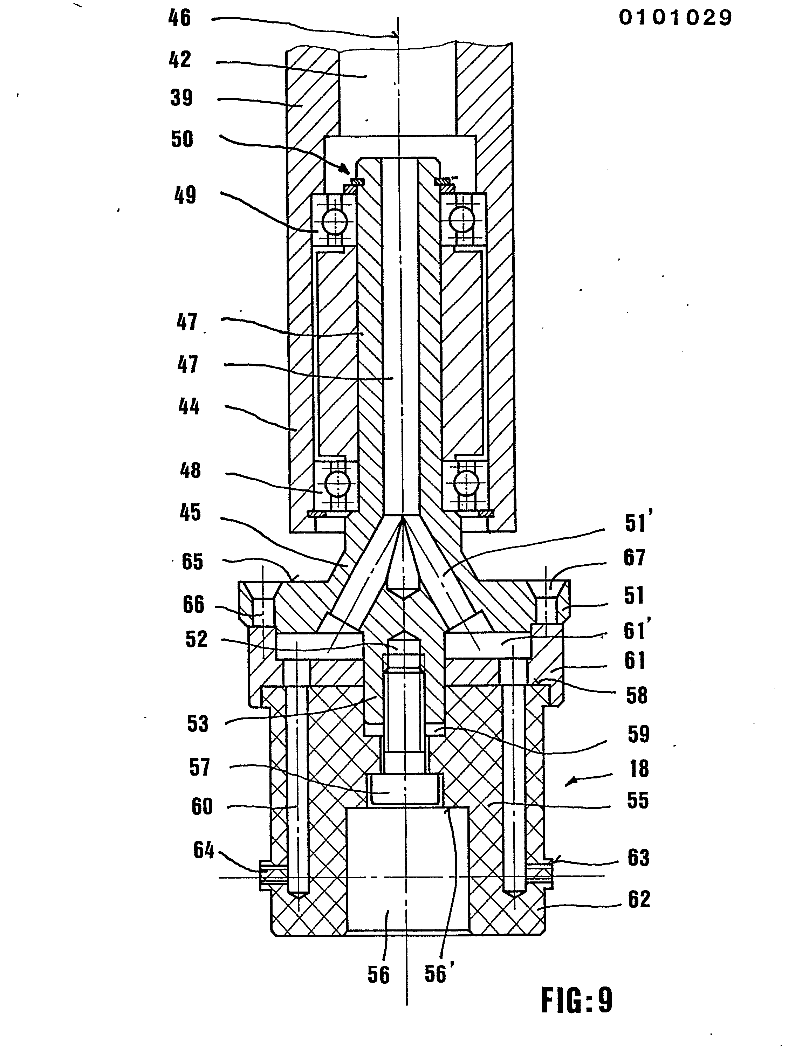

Am unteren Ende 44 der Hubvorrichtung 39 ist der Rollkopf 18 angeordnet und, wie in Fig.9 dargestellt, mittels eines stempelförmigen Verbindungsstückes 45 um seine, mit der Hubvorrichtung 39 gemeinsamen Längsachse 46 drehbar gelagert.
Hierzu ist der rohrförmige Stiel 47 des Verbindungsstückes 45 in zwei Kugellagern 48 bzw. 49 gehalten und mittels Distanzringen 50 justiert.

Das untere Ende des Verbindungsstückes 45 ist als kreisscheibenförmiger Stempel 51 ausgebildet, welcher wiederum auf seiner Unterseite eine zylindrische, nach unten hervorstehende, eine Gewindebohrung 52 enthaltende und konzentrisch angeordnete Befestigungsvorrichtung 53 aufweist, welche die Zentrierung der einzelnen Bauteile des Rollkopfes 18 und deren Befestigung bewirkt.

Der den Folienband-Abschnitt 13' in ein Werkstück 54 einbringende eigentliche Kopf 55 ist im wesentlichen ein massiv ausgebildeter Zylinderabschnitt mit einer, von seiner Unterseite ausgehenden, zur Längsachse 46 konzentrischen Sacklochbohrung 56, in deren Boden 56' weitere, abgestufte zentrale Bohrungen für eine Befestigungsschraube 57 vorgesehen sind. In der, dem unteren Ende 51 des Verbindungsstückes 45 gegenüberliegenden Radialfläche 58 des Kopfes 55 ist eine, dem Durchmesser der Befestigungsvorrichtung 53 entsprechende Bohrung 59 zur Zentrierung des Kopfes 55 am stempelförmigen Verbindungsstück 45 vorgesehen.

Weiter weist der Kopf 55 eine Mehrzahl von parallel zur Längsachse 46 und in einem Abstand zu seinem Außenumfang angeordnete Sacklochbohrungen 60 auf, welche über einen Hohlraum 47' im Stiel 47 des stempelförmigen Verbindungstückes 45 mit dem Hohlraum 42 der Hubvorrichtung 39 in Verbindung stehen.

Zur Herstellung dieser Verbindung ist zwischen der Unterseite des Stempels 51 und der oberen Radialfläche 58 des Kopfes 55 ein ebenfalls scheibenförmiges Zwischenstück 61 mit im Durchmesser der Befestigungsvorrichtung 53 entsprechender axialer Bohrung vorgesehen und schließt mit der Unterseite des Stempels 51 einen Zwischenraum 61' ein, welcher die Sacklochbohrungen 60 im Kopf 55 mit den geneigt zur Längsachse 46 im Stempel 51 und im Übergangsbereich vom Stempel 51 zum Stiel 47 des Verbindungsstückes 45 angeordneten Bohrungen 51' verbindet, wobei das Zwischenstück 61 ebenfalls zur Längsachse 46 achsparallele und mit den Sacklochbohrungen 60 konzentrische Bohrungen aufweist.

In einem Abstand von seiner unteren Stirnfläche weist der Kopf 55 einen ringförmig ausgebildeten, einen größeren Durchmesser aufweisenden Aufnahme-Bereich 63 auf, welcher in seiner Höhe der Breite des aufzunehmenden Folienband-Abschnittes 13' entspricht. In diesem Aufnahme-Bereich 63 sind über den Umfang verteilt horizontale Bohrungen 64 vorgesehen, welche die Verbindung der Sacklochbohrungen 60 zum Vakuum herstellen.

Der Stempel 51 weist benachbart zu seinem äußeren Rand zwei sich gegenüberliegende, trichterförmig ausgebildete Bohrungen 66 bzw. 67 auf, in welche bei angehobener Stellung der Hubvorrichtung 39 die Mitnehmerstifte 38 eingeführt sind.

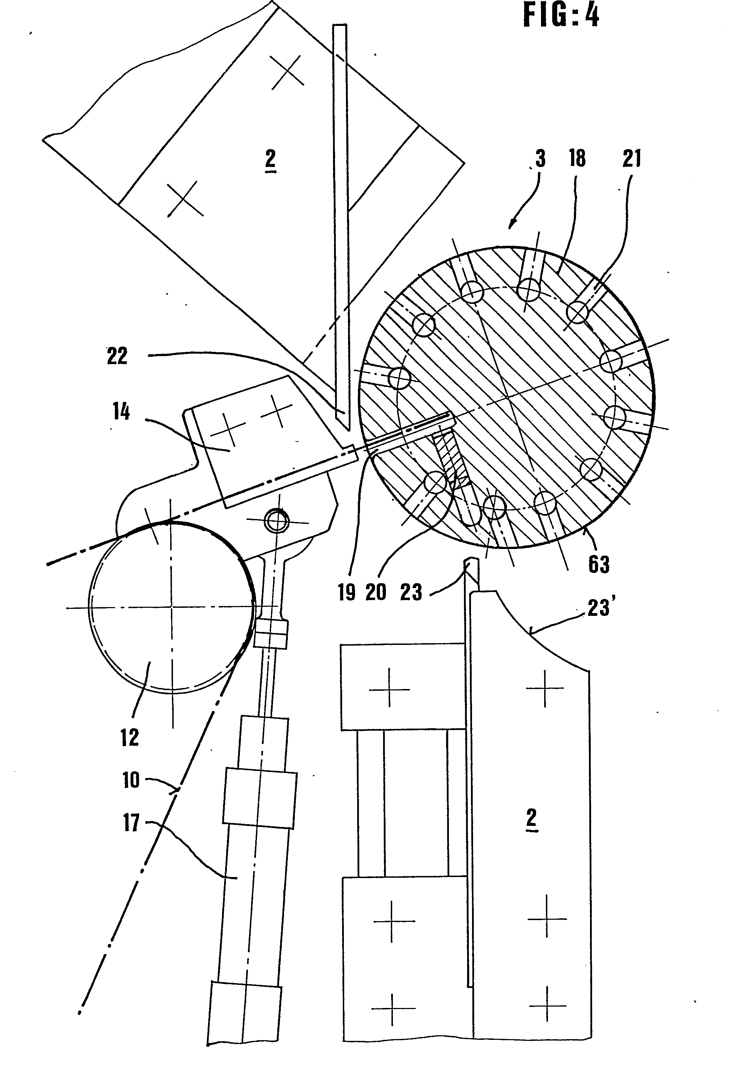

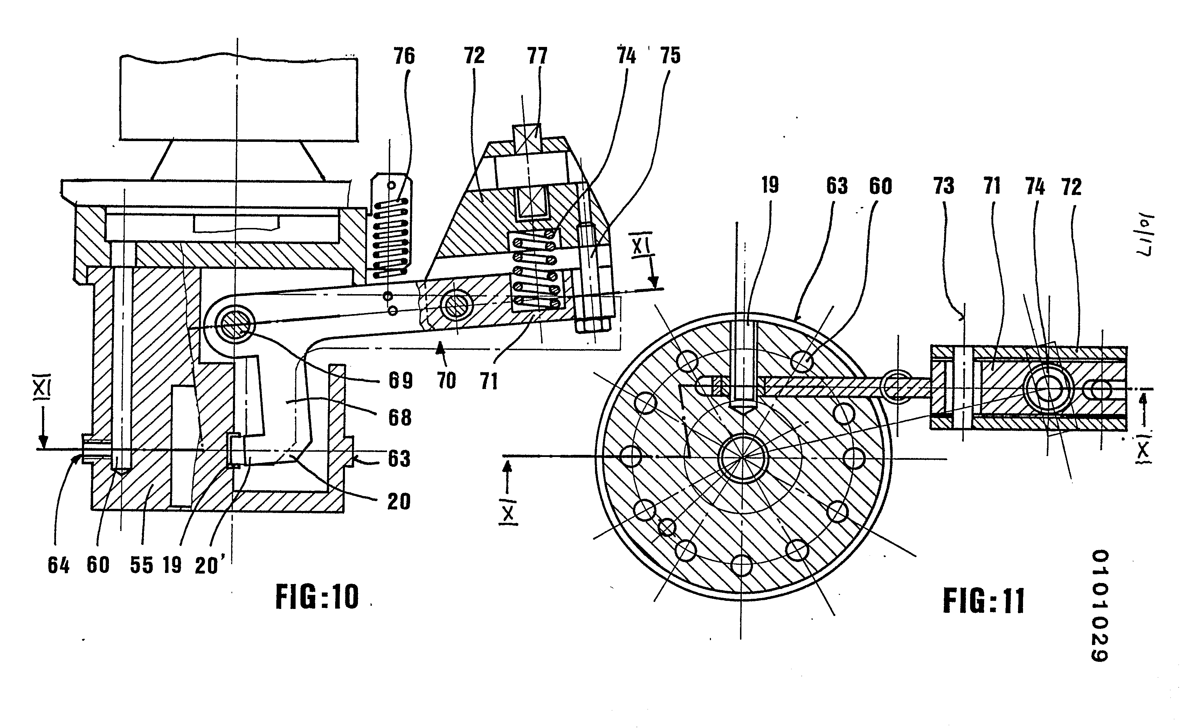

Der bereits oben beschriebene und in den Figuren 4, 5 und 6 dargestellte, im Aufnahmebereich 63 angeordnete, radial in das Innere des Kopfes 55 führende Sackschlitz 19, welcher der Aufnahme des Anfangs 13 a des Folienband-Abschnittes 13' dient, sowie das den Anfang 13 a haltende Klemmstück 20 sind in den Figuren 10 und 11 veranschaulicht.

Klemmstück 20 ist Teil eines ersten Endes 68 eines, um eine im Kopf 55 angeordnete horizontale Achse 69 schwenkbaren Kipphebels 70. Klemmstück 20 weist eine, rechtwinklig abstehende und in den Sackschlitz 19 hineinragende Nase 20' auf, welche sich unmittelbar gegen den Anfang 13 a des Folienband-Abschnittes 13' anlegt und dieses hält.

Das zweite Ende 71 des Kipphebels 70 ist zum ersten Ende 68 rechtwinklig und zur Nase 20' entgegengesetzt angeordnet und ragt über den Außenumfang des Kopfes 55 hinaus.

Am zweiten Ende 71 des Kipphebels 70 ist ein Nockenrollenhalter 72 um eine horizontale Achse 73 beweglich befestigt und unter Zwischenschaltung einer Feder 74 elastisch abgestützt, wobei der Federweg mittels einer Einstellschraube 75 begrenzt ist.

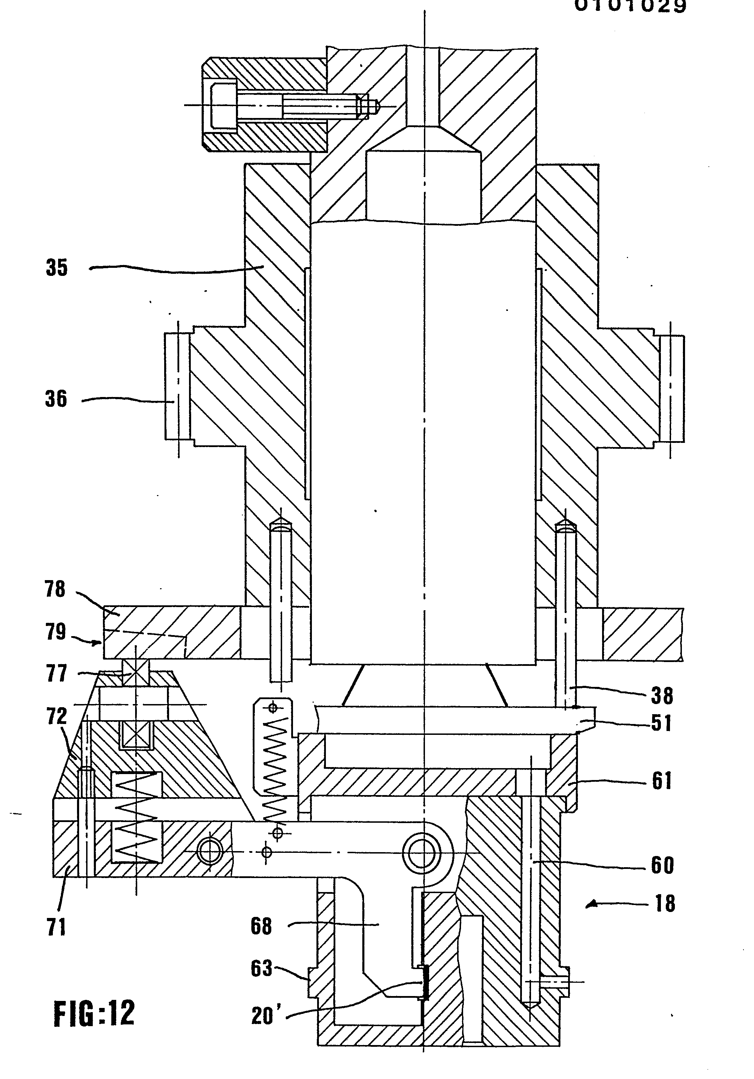

Nockenrollenhalter 72 weist eine, dem Haltearm 25 zugekehrte Nockenrolle 77 auf, deren Achse radial auf den Mittelpunkt des Kopfes 55 ausgerichtet ist und welche, wie in Fig.12 dargestellt, bei angehobener Stellung des Rollkopfes 18 gegen eine kreisförmige Nockenbahn 78 zur Anlage kommt.

Das zweite Ende 71 des Kipphebels 70 wird mittels einer Rückstellfeder 76 in einer oberen Stellung gehalten, welche der Öffnungsstellung des Klemmstückes 20 im Sackschlitz 19 entspricht.

Nockenbahn 78 ist im wesentlichen horizontal ausgebildet und weist an einer vorbestimmten Stelle eine Vertiefung 79 auf.

Unterhalb des Haltearmes 25 bzw. des Rollkopfes 18 bzw. in deren Schwenkbereich ist ein Drehtisch 80 angeordnet, auf welchem sich mehrere, hintereinander im Kreis angeordnete Aufnahme-Vorrichtungen 83 befinden, welche die zu behandelnden Werkstücke 54 halten.

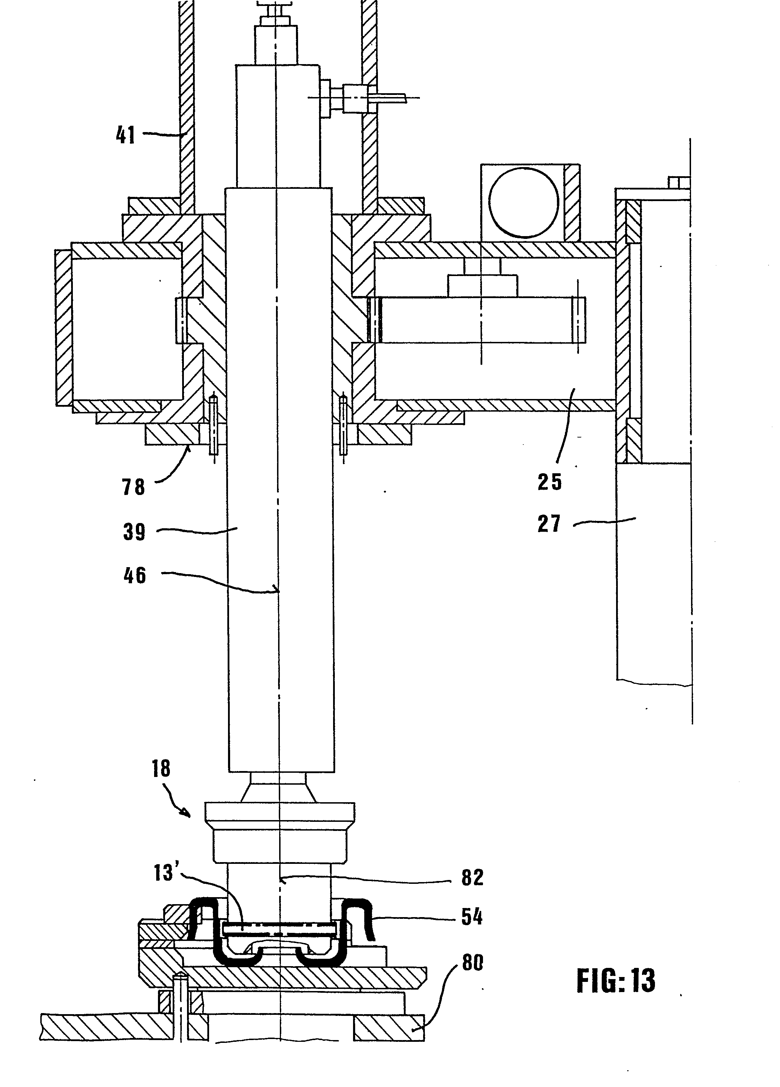

In der Arbeitsstellung, also wenn das zu behandelnde Werkstück 54 unter die eingeschwenkte Position des Rollkopfes 18 verbracht ist, fallen dessen Längsachse 46 mit der Längsachse 82 des Werkstückes zusammen. Siehe Fig. 13.

Die Aufnahmevorrichtung 83 ist auf dem Drehtisch 80 um die Achse 82 drehbar angeordnet und ist in Arbeitsstellung mit einem entkuppelbaren Antrieb 84 verbunden.

Zwecks genauer Positionierung des Werkstückes 54 in der Aufnahmevorrichtung 83 ist diese von einer Verriegelungsvorrichtung 85
gehalten, welche durch eine, benachbart zum Antrieb 84 angeordnete Entkuppelvorrichtung 86 entriegelt werden kann.

Zur Erläuterung der Arbeitsweise der vorstehend beschriebenen Vorrichtung und insbesondere zur Darstellung des erfindungsgemäßen
Verfahrens wird nachfolgend die Arbeitsweise der Vorrichtung beschrieben.

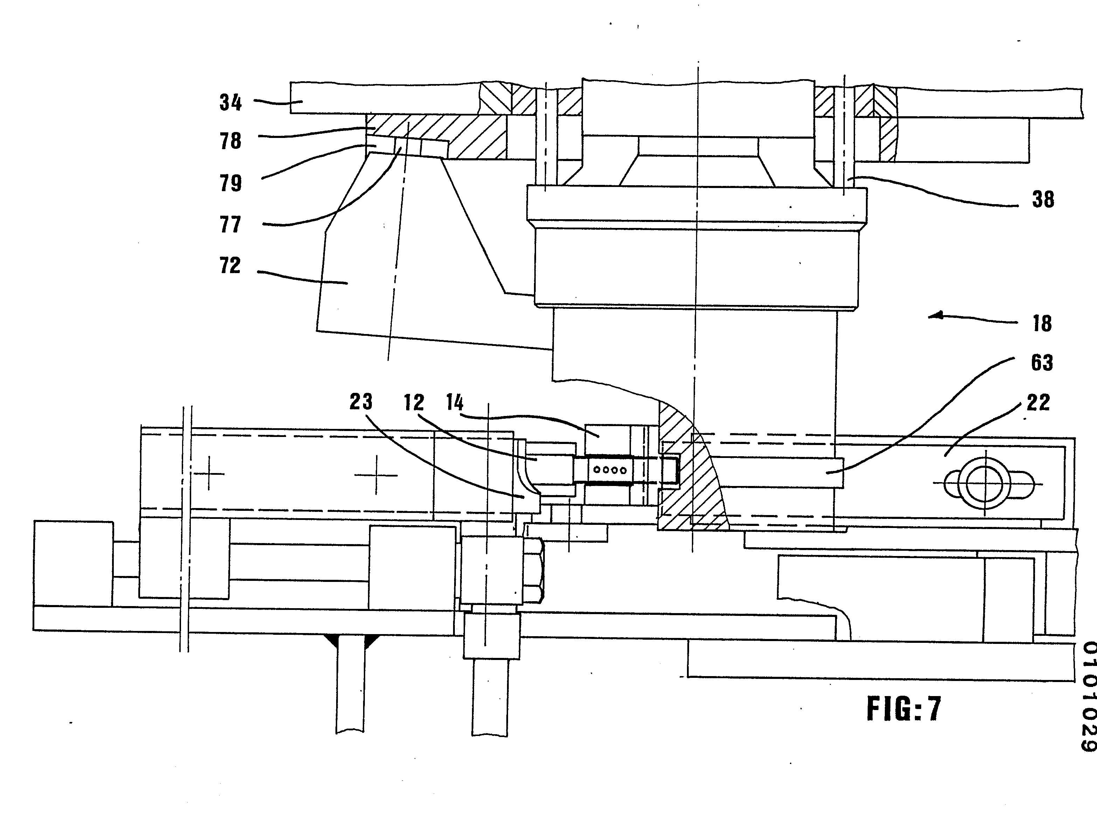

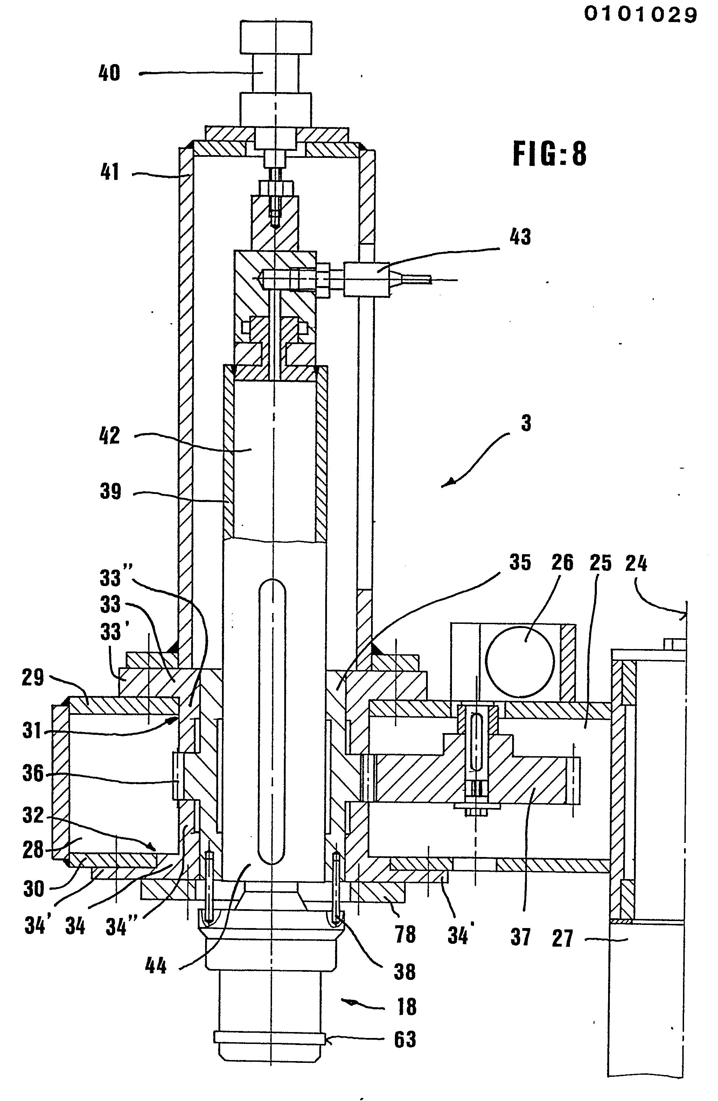

Hubvorrichtung 39 und damit auch der Rollkopf 18 befinden sich,
wie in Fig. 8 und Fig.12 dargestellt in angehobener Stellung,
so daß Nockenrolle 77 auf der Nockenbahn 78 anliegt und sich
insbesondere in der Vertiefung 79 befindet. Siehe Fig. 7. In
dieser Stellung ist Klemmstück 20 aus dem Sackschlitz 19 herausgerückt, siehe Fig. 4, und gibt den Sackschlitz 19 vollständig
frei.

Rollkopf 18 ist, vom Haltearm 25 gehalten, in unmittelbare Nähe
der Saugbacke 14 gerückt.

Das von der Trägerschicht 10 befreite Folienband 13 wird von der
Saugbacke 14 an den Rollkopf 18 herangeführt und gleitet bei
weiterem Vortransport in den Sackschlitz 19 bis an dessen Boden.

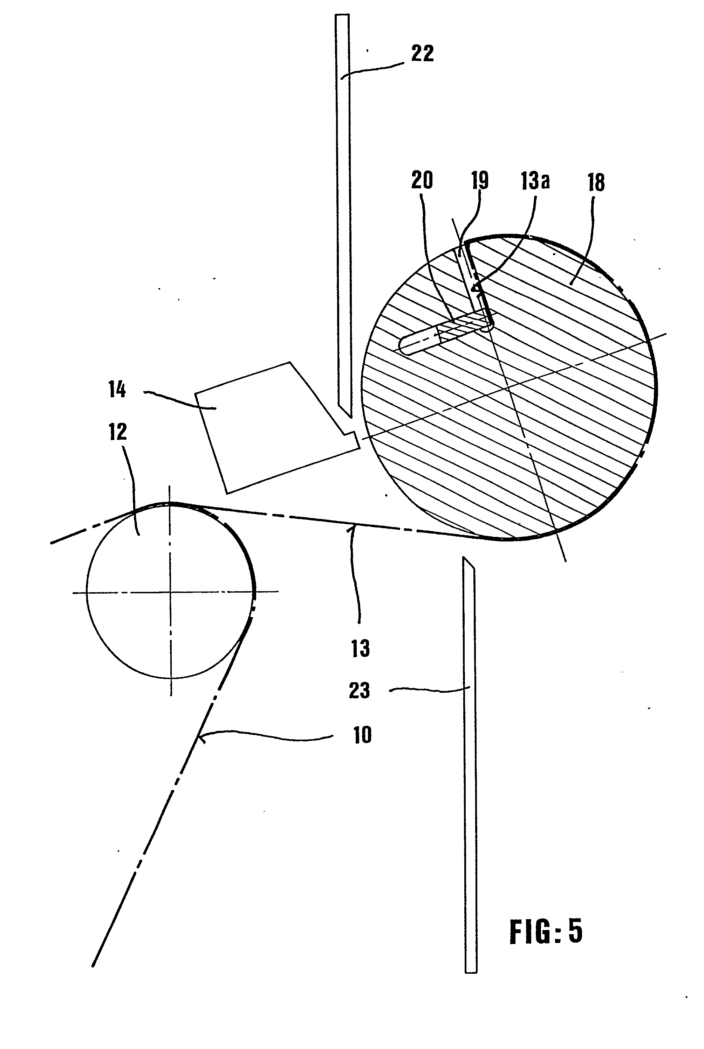

Zu diesem Zeitpunkt beginnt sich Rollkopf 18 entgegengesetzt dem Uhrzeigersinn zu drehen, wobei Nockenrolle 77 die Vertiefung 79 in der Nockenbahn 78 verläßt und das Klemmstück 20, insbesondere dessen Nase 20' durch Niederdrücken des Kipphebels 70 gegen den Anfang 13 a des Folienbandes 13, dargestellt in Fig.5, angedrückt wird. Durch die Drehung des Rollkopfes 18 legt sich das Folienband 13 auf den vorgesehenen Aufnahme-Bereich 63 auf, wobei sich Folienband 13 von der Saugbacke 14 entfernt.

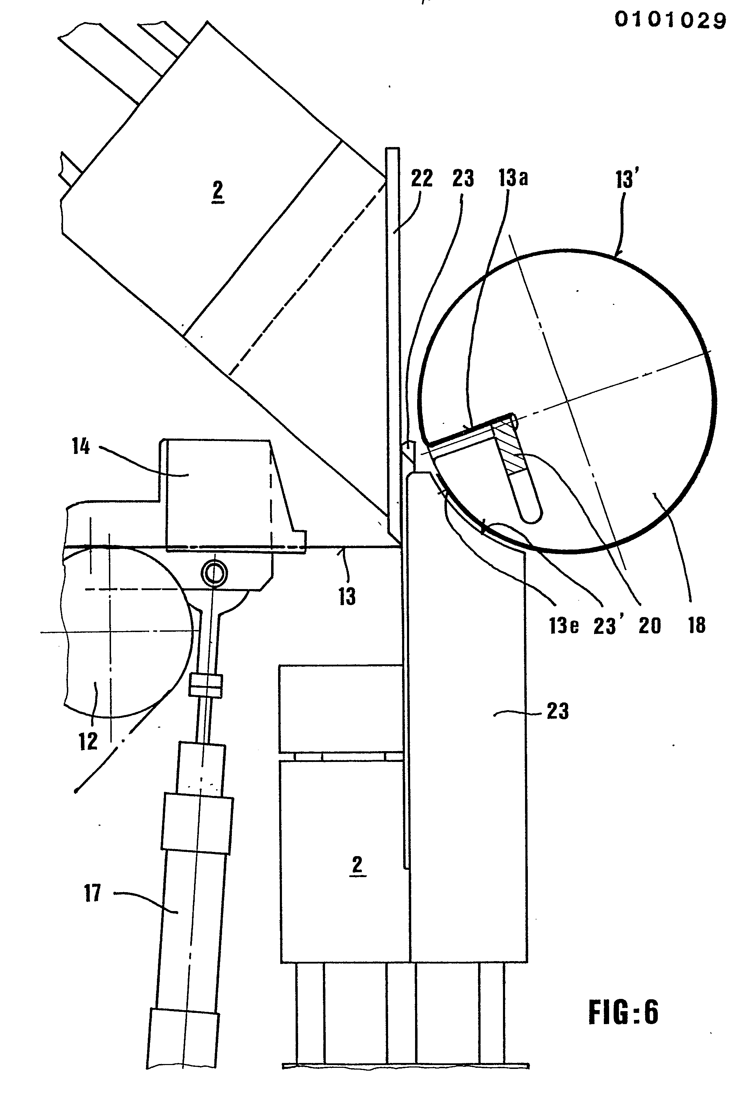

Kurz bevor der in seiner Länge vorbestimmte Folienband-Abschnitt 13' vollständig auf dem Rollkopf 18 aufliegt, fährt Haltearm 25 den Rollkopf 18 zurück, die Schneid-Werkzeuge 22 bzw. 23 der Folienband-Schneid-Einheit 2, dargestellt in Fig.6, bewegen sich horizontal aufeinander zu und trennen Folienband-Abschnitt 13' vom Folienband 13, dessen nunmehr freigewordenes Ende wieder von der Saugbacke 14 gehalten wird.
Das Ende 13 e des Folienband-Abschnittes 13' wird von der, am Schneid-Werkzeug 23 besonders ausgebildeten und dem Außendurchmesser des Rollkopfes 18 angepaßten Anblasfläche 23' mittels Anblasens von Luft gegen den Aufnahmebereich 63 des Rollkopfes 18 gedrückt.

Anschließend schwenkt Haltearm 25 den Rollkopf 18 über das, von dem Drehtisch 80 in der Aufnahmevorrichtung 83 bereitgestellte, mit dem Folienband-Abschnitt 13' an dessen Fläche 81 zu versehende Werkstück 54. Anschließend wird der Rollkopf 18 von der Hubvorrichtung 39 in das Werkstück eingefahren, dargestellt in Fig. 13.

Sobald sich die Hubvorrichtung 39 nach unten bewegt, löst sich Nockenrolle 77 von der Nockenbahn 78 und durch von der Rückstellfeder 76 verursachte Rückstellung des Kipphebels 70 gibt die Klemmnase 20' den Anfang 13 a des Folienband-Abschnittes 13' frei, wobei der Folienband-Abschnitt durch ein, in den horizontalen Bohrungen 64 im Aufnahme-Bereich 63 herrschendes Vakuum gehalten wird.

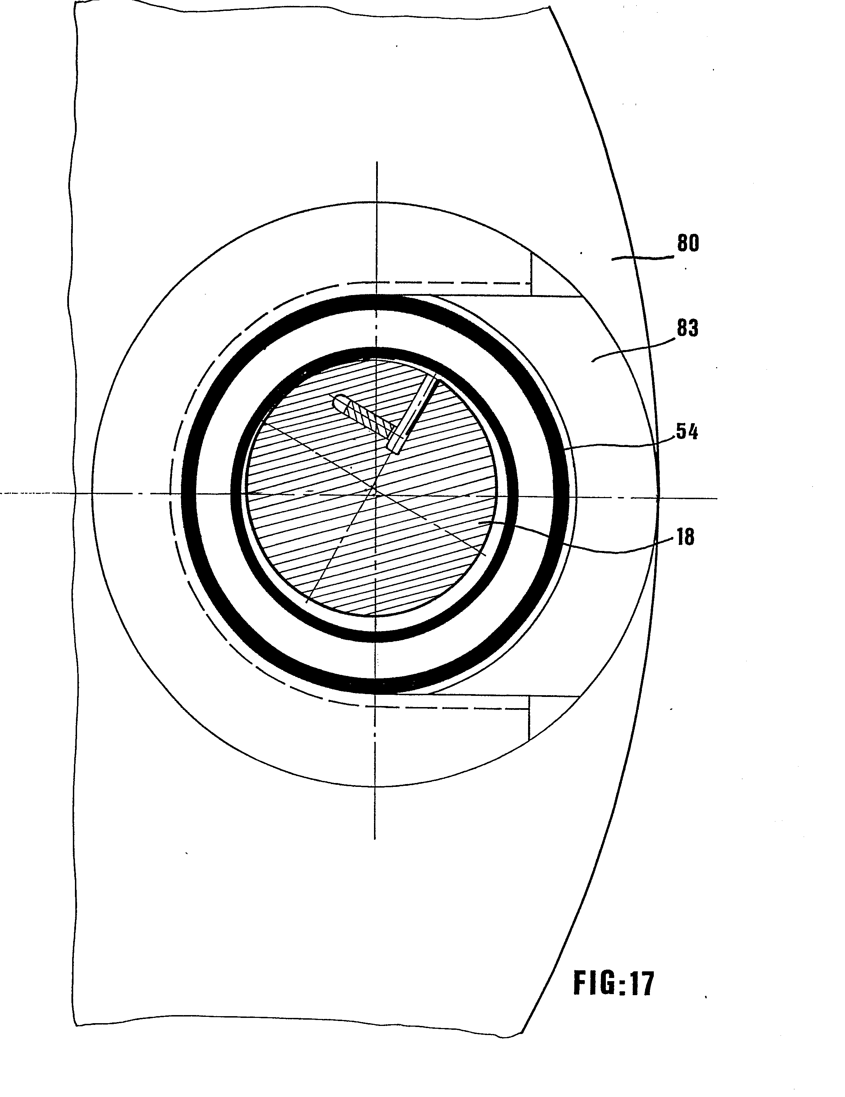

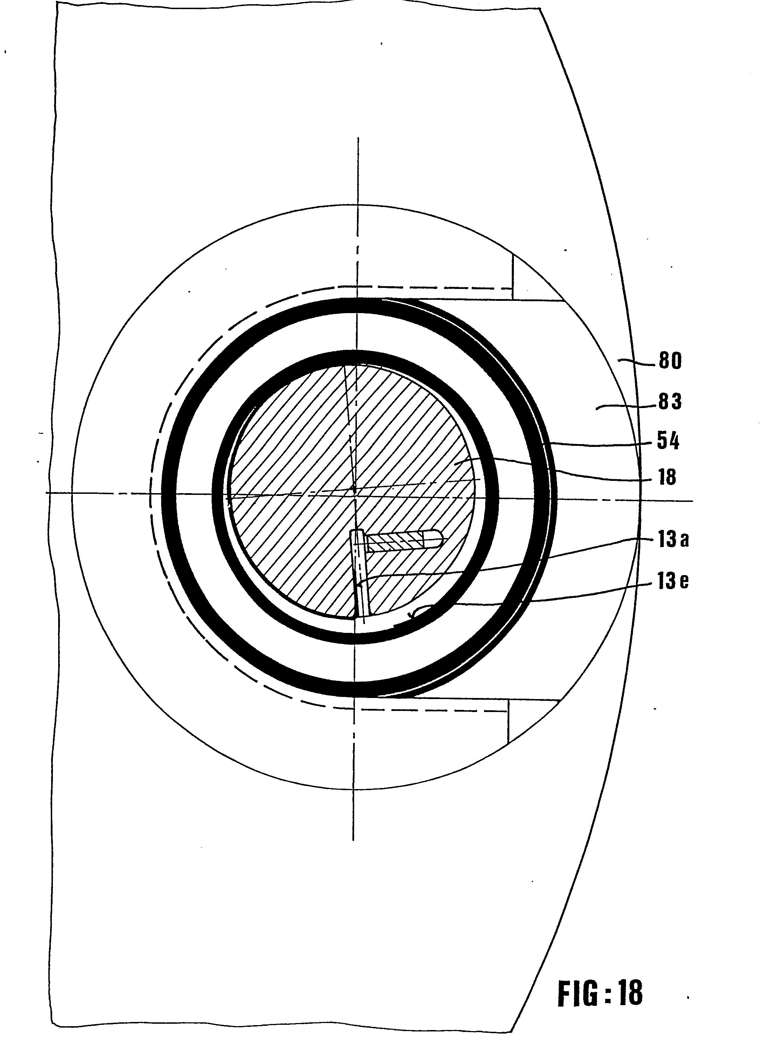

Bei Einfahrstellung gemäß Fig. 13 fallen die Längsachse 46 der Hubvorrichtung 39 bzw. des Rollkopfes 18 mit der Längsachse 82 des Werkstückes bzw. der Aufnahmevorrichtung 54 zusammen. Durch entsprechende Positionierung des Werkstückes 54 in der Aufnahmevorrichtung 83 und ggf. auch durch entsprechende Drehung des Rollkopfes 18 wird das Ende 13 e des Folienband-Abschnittes 13' durch Anschwenken des Haltearmes 25 gegen die vorbestimmte Stelle im Bereich 81 des Werkstückes 54 gedrückt. Anschließend wird Aufnahmevorrichtung 83 und damit Werkstück 54 gegen den Uhrzeigersinn in Drehung versetzt und Folienband-Abschnitt 13' legt sich im Bereich 81 im Hohlraum des Werkstückes 54 an und wird durch die Klebeschicht gehalten. In Fig.17 und 18 ist dieser Andrückvorgang dargestellt. Dieser Andrück- bzw. Abrollvorgang des
Rollkopfes 18 im Werkstück 54 kann mehrfach wiederholt werden,
so daß ein gleichmäßiges Anliegen des Folienband-Abschnittes 13'
im Werkstück 54 gewährleistet ist.

Anschließend schwenkt Haltearm 25 den Rollkopf wieder in die
Stellung zurück, in welcher die Längsachsen 46 und 82 zusammenfallen und Hubvorrichtung 39 zieht den Rollkopf 18 aus dem
Werkstück 54 heraus.

Gleichzeitig löst sich Entkupplungsvorrichtung 86, so daß die
Verriegelungs-Vorrichtung 85 die Aufnahme-Vorrichtung 83 auf
dem Drehtisch 80 fixiert, Antrieb 84 wird ebenfalls entkuppelt und Drehtisch 80 verbringt durch Drehung das nächste,
zu behandelnde Werkstück in die Arbeitsstellung. Der vorstehend geschilderte Vorgang wiederholt sich.

Christian Viertel
Kiebitzweg 22
8013 Haar

-------------------------------------------------------------

Verfahren und Vorrichtung zum Einbringes eines, von
einem Vorrat bereitgestellten Folienabschnittes in
einen offenen Hohlraum eines Werkstückes.

-------------------------------------------------------------

Patentansprüche.

1.) Verfahren zum Einbringen eines, von einem Vorrat bereitgestellten
Folienabschnittes in einen offenen Hohlraum eines Werkstückes,
d a d u r c h   g e k e n n z e i c h n e t, daß ein, den Innenabmessungen des Werkstückes angepaßter Rollkopf (18), welcher um seine Rotationsachse (46) drehbar, in deren Längsrichtung verschieblich gelagert und an einem horizontal schwenkbaren Haltearm (25) gehalten ist, den von einer Folien-Bevorratungs-Einheit (1) bereitgestellten Folienabschnitt greift, durch Drehen um seine Vertikalachse (46) den Folienabschnitt auf einem an seinem Außenumfang besonders ausgebildeten Aufnahme-Bereich aufnimmt und mittels geeigneter Haltemittel hält, anschließend von dem Haltearm (25) über das Werkstück geschwenkt und in den darin befindlichen, mit dem Folienabschnitt zu versehenden Hohlraum durch Absenken in seiner Vertikalachse (46) eingeführt wird, sich mit dem an seinem Außenumfang ausgebildeten Aufnahme-Bereich aufliegenden Ende des Folienabschnittes gegen den Anfangsteil des mit dem Folienabschnitt zu versehenden Teiles der Wandung des Hohlraumes des Werkstückes andrückt und zurückdrehend den Folienabschnitt durch Abrollen an der Wandung auf dieselbe anlegt und in den Hohlraum einbringt, anschließend aus dem Werkstück herausgezogen und wieder auf die Folien-Bevorratungs-Einheit (1) zugeschwenkt wird.

2.) Verfahren nach Anspruch 1, d a d u r c h   g e k e n n -
z e i c h n e t, daß ein bandförmig ausgebildeter Folienabschnitt (13') von einem in der Folien-Bevorratungs-
Einheit (1) bereitgestellten endlosen Vorrat (9) an Folienband (13) abgezogen, von einer dem Folien-Vorrat (9) nach-
und dem Rollkopf (18) unmittelbar vorgeordneten Folienband-
Schneid-Einheit (2) auf eine vorbestimmte Länge abgelängt
und von dem Rollkopf (18) in eine, in der Wandung eines
zylindrischen Hohlraumes eines Werkstückes (54) angeordnete,
im Querschnitt rechteckige in einer, zur Längsachse (82)
senkrechten Durchmesserebene des Hohlraumes liegenden Ringnut (81) eingebracht wird.

3.) Verfahren nach Anspruch 2, d a d u r c h   g e k e n n -
z e i c h n e t,  daß das mit einer Klebeschicht auf einer
Trägerschicht (10) aufgebrachte Folienband (13) von dem auf
einer ersten Haspel (7) liegenden Folienband-Vorrat (9)
durch den von einer motorisch angetriebenen zweiten Haspel (8)
verursachten Vortrieb um eine Umlenkrolle (12) herumgeführt
und dabei tangential von der Trägerschicht (10) abgelöst,
von einer der Umlenkrolle (12) nachgeschalteten Saugbacke (14)
mittels darin erzeugten Vakuums gehalten und auf den Rollkopf (18) zugeführt wird.

4.) Verfahren nach Anspruch 3, d a d u r c h   g e k e n n -
z e i c h n e t,  daß der Anfang (13a) des Folienbandes (13) von der Saugbacke (14) in einen, in dem für die Aufnahme des Folienbandes (13) besonders ausgebildeten Aufnahme-Bereich (63) des gegenüberliegenden Rollkopfes (18) vorgesehenen,radial in das Innere des Rollkopfes (18) führenden Sackschlitz (19) eingeführt und von einem darin angeordneten Klemmstück (20) gehalten wird.

5.) Verfahren nach Anspruch 4, d a d u r c h  g e k e n n - z e i c h n e t, daß das Folienband (13) durch Drehen des Rollkopfes (18) weiter von dem Folienband-Vorrat (9) an der Umlenkrolle (12) vorbei abgezogen wird, wobei sich das Folienband (13) von der Saugbacke (14) löst, sich auf dem Rollkopf (18) ausgebildeten Aufnahme-Bereich (63) kontinuierlich auflegt und, nachdem der längenmäßig bestimmte Folienband-Abschnitt (13') von dem Folienband (13) durch die dem Rollkopf (18) vorgeordnete Folienband-Schneid-Einheit (2) abgelängt wurde, wieder von der nachgeführten Saugbacke (14) gehalten wird.

6.) Verfahren nach Anspruch 5, d a d u r c h  g e k e n n - z e i c h n e t, daß das Ende (13 e) des Folienband-Abschnittes (13') nach Trennung von dem Folienband (13) durch die Folienband-Schneid-Einheit (2) mittels angeblasener Luft auf den Aufnahme-Bereich (63) des Rollkopfes (18) angedrückt wird.

7.) Verfahren nach Anspruch 5, d a d u r c h g e k e n n - z e i c h n e t, daß der auf dem Aufnahme-Bereich (63) des Rollkopfes (18) aufliegende Folienband-Abschnitt (13') von einem in dem Aufnahme-Bereich (63) erzeugten Vakuum gehalten wird.

8.) Verfahren nach Anspruch 2, d a d u r c h g e k e n n - z e i c h n e t, daß der in den Hohlraum des Werkstücks (54) eingeführte Rollkopf (18) mit dem Teil seines, den Folienband-Abschnitt (13') haltenden Aufnahme-Bereichs (63) in die für die Aufnahme des Folienband-Abschnittes (13') vorgesehene Ringnut (81) des Werkstückes (54) gedrückt wird, auf welchem das Ende (13 e) des Folienband-Abschnittes (13') liegt und durch zur Drehung des Rollkopfes (18) bei der Aufnahme des Folienband-Abschnittes (13') entgegengesetztes Drehen des Werkstückes (54) mit seinem Aufnahme-Bereich (63) in der Ringnut abläuft und den Folienband-Abschnitt (13') kontinuierlich in diese einbringt, wobei das Klemmstück (20) gelöst ist und der ursprüngliche Anfang (13 a) des Folienband-Abschnittes (13') aus dem Sackschlitz (19) herausgleiten und sich in die Ringnut (81) einlegen kann.

9.) Verfahren nach Anspruch 8, d a d u r c h g e k e n n - z e i c h n e t, daß der Rollkopf (18) mehrfach durch Drehen des Werkstückes an dessen Wandung abgerollt und damit der aufgebrachte Folien-Abschnitt fester an- und/oder glattgedrückt wird.

10.) Vorrichtung zur Durchführung des Verfahrens gemäß Ansprüche 1 bis 9, d a d u r c h g e k e n n z e i c h n e t, daß an dem freien Ende (28) eines, an einer Stütze (27) um eine ortsfeste Achse (24) horizontal schwenkbar angeordneten Haltearmes (25) eine vertikal arbeitende Hubvorrichtung (39) vorgesehen ist, welche an ihrem unteren Ende (44) einen, dem Innendurchmesser des Werkstückes angepaßten Rollkopf (18) aufweist, der um seine Längsachse (46) drehbar ist, daß benachbart zum Schwenkbereich des Rollkopfes (18) eine Folien-Bevorratungs-Einheit (1) mit bereitgehaltenen Folien-Abschnitten vorgesehen ist, welche die Folien-Abschnitte an den sich in seiner höchsten Stellung befindlichen Rollkopf (18) heranführt,

daß der Rollkopf (18) einen an seinem Außenumfang besonders ausgebildeten Aufnahme-Bereich und Haltemittel aufweist, welche den zugeführten Folien-Abschnitt aufnehmen und bis zur anschließenden Einbringung im vorgesehenen Bereich des Werkstückes hält und

daß das Werkstück in einer drehbaren Aufnahmevorrichtung (83) eingesetzt ist.

11.) Vorrichtung nach Anspruch 10, d a d u r c h g e k e n n z e i c h n e t, daß der Folien-Abschnitt bandförmig ausgebildet und in einem, in der Folien-Bevorratungs-Einheit (1) angeordneten Folienband-Vorrat (9) bereitgestellt ist.

12.) Vorrichtung nach Anspruch 11, d a d u r c h g e k e n n z e i c h n e t, daß das Folienband (13) mit einer selbstklebenden Schicht auf einer Trägerschicht (10) aufgebracht ist.

13.) Vorrichtung nach den Ansprüchen 10, 11 und 12, d a d u r c h g e k e n n z e i c h n e t, daß die Folien-Bevorratungs-Einheit (1) zwei horizontal angeordnete Haspeln (7 bzw. 8) und eine Umlenkrolle (12) sowie eine Saugbacke (14) aufweist, welche auf einer Konsole (5) an einer Stütze (6) befestigt sind und daß der Folienband-Vorrat (9) in Form eines Wickels auf der Haspel (7) bereitgestellt ist und das Folienband (13) von der Haspel (7) abgezogen, um die Umlenkrolle (12) herumgeführt und von der Saugbacke (14) gehalten ist und daß die Trägerschicht (10) mit der Haspel (8) verbunden ist, welche einen Antrieb (11) aufweist.

14.) Vorrichtung nach Anspruch 13, d a d u r c h
g e k e n n z e i c h n e t, daß die Saugbacke (14)
um eine, auf der Konsole (5) vertikal angeordneten
Achse (16) schwenkbar und von einem Zylinder (17)
antreibbar ist und eine vertikal flächig ausgebildete
Führungsbahn (14') aufweist, in welcher Saugöffnungen (15)
vorgesehen sind.

15.) Vorrichtung nach Anspruch 13, d a d u r c h
g e k e n n z e i c h n e t, daß der Umlenkrolle (12)
und der Saugbacke (14) eine Folienband-Schneid-Einheit (2)
nachgeschaltet ist, welche im wesentlichen zwei horizontal
gegeneinander verschiebliche Schneidwerkzeuge (22 bzw. 23)
aufweist.

16.) Vorrichtung nach Anspruch 10, d a d u r c h
g e k e n n z e i c h n e t, daß der Haltearm (25) als
Hohlträger mit Ober- und Untergurten (29 bzw. 30) ausgebildet ist, welche benachbart zum freien Ende (28) des Haltearmes (25) konzentrisch übereinander angeordnete Bohrungen
(31 bzw. 32) aufweisen, in welche jeweils mit im Querschnitt
rechtwinklig zueinander gestellten Schenkeln ausgebildete
Lagerringe (33 bzw. 34) eingesetzt sind, die wiederum ein mit einem mittig angeordneten Zahnkranz (36) versehenes, im wesentlichen hohlzylindrisch ausgebildetes Lager (35) halten und welches über ein im Haltearm (25) gelagertes Zahnrad(37) mit einem Antrieb verbunden ist und daß das Lager (35) eine zylindrisch ausgebildete, von einem Hubzylinder (40) antreibbare Hubvorrichtung (39) längsverschieblich hält und daß an deren unterem Ende (44) der Rollkopf (18) befestigt ist.

17.) Vorrichtung nach Anspruch 10, d a d u r c h  g e k e n n z e i c h n e t, daß der Rollkopf (18) im wesentlichen aus einem Verbindungsstück (45), einem Zwischenstück (61) und einem Kopf (55) besteht, welche eine gemeinsame Längsachse (46) aufweisen und an ihren Außenflächen rotationssymmetrisch ausgebildet sind.

18.) Vorrichtung nach Anspruch 17, d a d u r c h  g e k e n n z e i c h n e t, daß das Verbindungsstück (45) im Querschnitt stempelförmig ist, wobei der Stiel (47) als Rohr ausgebildet und in Kugellagern (48 bzw. 49) im unteren Ende (44) der Hubvorrichtung (39) um seine Längsachse (46) frei drehbar, in Längsrichtung unverschieblich gehalten ist und daß der Stempel (51) als kreisförmige Platte ausgebildet ist, welche auf ihrer dem Stiel (47) gegenüberliegenden Seite eine zylindrisch ausgebildete Befestigungsvorrichtung (53) aufweist, in welcher eine zentrische
Sackloch-Gewinde-Bohrung (52) vorgesehen ist.

19.) Vorrichtung nach den Ansprüchen 17 und 18, d a d u r c h
g e k e n n z e i c h n e t, daß der Kopf (55) zylindrisch
ausgebildet ist und auf seiner Unterseite eine zentrale
Bohrung (56) aufweist, in deren Boden (56') eine Befestigungsschraube (57) eingesetzt und welche in die Sackloch-Gewindebohrung (52) des Stempels (51) einschraubbar ist.

20.) Vorrichtung nach den Ansprüchen 17, 18 und 19,
d a d u r c h  g e k e n n z e i c h n e t, daß zwischen
Stempel (51) und Kopf (55) das Zwischenstück (61) vorgesehen
ist, welches scheibenförmig ausgebildet ist und mit der
Unterseite des Stempels (51) einen zylindrischen Zwischenraum (61') einschließt, und welches eine zentrale Bohrung
entsprechend dem Durchmesser der Befestigungsvorrichtung (53)
und, in einem radialen Abstand davon, kreisförmig angeordnete
achsparallele Bohrungen aufweist.

21.) Vorrichtung nach den Ansprüchen 17 und 20, d a d u r c h   g e k e n n z e i c h n e t, daß der Stempel (51) zur Längsachse (46) geneigt angeordnete Bohrungen (51') aufweist, welche den Hohlraum (47') des Stieles (47) mit dem Zwischenraum (61') verbindet.

22.) Vorrichtung nach den Ansprüchen 16 und 17, d a d u r c h   g e k e n n z e i c h n e t, daß der Stempel (51) benachbart  zu seinem äußeren Rand zwei sich gegenüberliegende, trichterförmig ausgebildete Bohrungen (66 bzw.67) aufweist und daß das Lager (35) auf seiner, nach unten aus dem Lagerring (34) herausragenden radialen Ringfläche zwei sich in gleichem Abstand wie die Bohrungen (66 bzw. 67) gegenüberliegende Mitnehmerstifte (38) aufweisen.

23.) Vorrichtung nach Anspruch 16, d a d u r c h   g e k e n n z e i c h n e t, daß auf der Unterseite des Lagerringes (34) eine, das Lager (35) umgebende und ringförmig ausgebildete Nockenbahn (78) befestigt ist.

24.) Vorrichtung nach den Ansprüchen 17, 19 und 20, d a d u r c h   g e k e n n z e i c h n e t, daß der Kopf (55) entsprechend den Bohrungen im Zwischenstück (61) angeordnete, mit diesen koaxiale Sacklochbohrungen (60) aufweist, welche in einem Abstand vor der Unterseite des Kopfes (55) enden und welche mittels horizontaler Boh- (64) rungen an der Außenfläche des Kopfes (55) enden.

25.) Vorrichtung nach Anspruch 24, d a d u r c h g e k e n n z e i c h n e t , daß der ringförmige Mündungs- bereich der horizontalen Bohrungen (64) an der Außenfläche des Kopfes (55) einen größeren Durchmesser als der Kopf (55) selbst und als Aufnahme-Bereich (63) für das Folienband (13) ausgebildet ist und in seiner Höhe der Breite des Folienbandes (13) entspricht.

26.) Vorrichtung nach den Ansprüchen 10 und 25, d a d u r c h g e k e n n z e i c h n e t , daß in dem für die Aufnahme des Folienband-Abschnittes (13') besonders ausgebildeten Aufnahme-Bereich (63) des Kopfes (55) ein, radial in das Innere des Kopfes (55) führender Sackschlitz (19) ausgebildet ist.

27.) Vorrichtung nach Anspruch 26, d a d u r c h g e k e n n z e i c h n e t , daß in der Nähe des Bodens des Sackschlitzes (19) ein, sich gegen eine der Wandungen des Sackschlitzes anlegbares Klemmstück (20) vorgesehen ist.

28.) Vorrichtung nach Anspruch 27, d a d u r c h g e k e n n z e i c h n e t, daß das Klemmstück (20) als rechtwinklig abstehende Nase (20') eines ersten Endes (68) eines, um eine horizontale Achse (69) drehbaren, im Kopf (55) befestigten Kipphebels (70) ausgebildet ist und daß der Kipphebel (70) ein, zu dem ersten Ende (68) rechtwinklig und zur Nase (20') entgegengesetzt angeordnetes zweites Ende (71) aufweist, welches über den Außenumfang des Kopfes (55) hinausragt.

29.) Vorrichtung nach Anspruch 28, d a d u r c h g e k e n n z e i c h n e t, daß an dem zweiten Ende (71) des Kipphebels (70) ein, um eine daran angeordnete horizontale Achse (73) begrenzt kippbarer Nockenrollenhalter (72) befestigt ist und an seiner, der Nockenbahn (78) am Haltearm (25) zugekehrten Seite, eine Nockenrolle (77) aufweist.

30.) Vorrichtung nach Anspruch 29, d a d u r c h g e k e n n z e i c h n e t, daß der Nockenrollenhalter (72) gegenüber dem zweiten Ende (71) des Kipphebels (70) mittels einer Feder (74) federnd abgestützt und mittels einer Einstellschraube (75) in seinem Kippwege begrenzt ist.

31.) Vorrichtung nach Anspruch 10, d a d u r c h
g e k e n n z e i c h n e t, daß die Aufnahmevorrichtung (83) auf einen Drehtisch (80) angeordnet und
von diesem in eine, mit der Hubvorrichtung (39) bzw.
dem Rollkopf (18) koaxiale Arbeitsstellung .bringbar ist.

32.) Vorrichtung nach Anspruch 31, d a d u r c h
g e k e n n z e i c h n e t, daß die Aufnahmevorrichtung (83) von einem, benachbart zum Drehtisch (80) angeordneten Antrieb (84) antreibbar ist.

33.) Vorrichtung nach Anspruch 32, d a d u r c h
g e k e n n z e i c h n e t, daß der Antrieb (84) aus
der Antriebsstellung entkuppelbar ist.

34.) Vorrichtung nach Anspruch 31, d a d u r c h
g e k e n n z e i c h n e t, daß die Aufnahmevorrichtung (83) mittels einer Verriegelungsvorrichtung arretierbar ist.

**FIG:1**

0101029

8  10  12  14  15

5  17  16  13

1

11

FIG:2

6

0101029

**FIG: 3**

4/17

0101029

FIG:4

S/n

0101029

22

20 19 13a 18

14

12

13

23

10

FIG: 5

**FIG:6**

0101029

FIG:7

0101029

FIG:8

0101029

**FIG:9**

FIG:10

FIG:11

76 72 77 74 75

19 63 60 73 71 74 72

XI

XI

X

X

X

X

69

70 71

68

63

20

64 60 55 19 20'

0101029

FIG:12

0101029

**FIG. 13**

0101029

**FIG:14**

80

83

84

**FIG:15**

0101029

80

83

13e

13a

18

54

**FIG:16**

0101029

FIG:17

FIG : 18

Europäisches
Patentamt

EUROPÄISCHER RECHERCHENBERICHT

0101029
Nummer der Anmeldung

EP 83 10 7740

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 568 834 (Y. SAYLE)  * Insgesamt * | 1,2,6 7,10 | B 23 P 19/00 |
| A | FR-A-1 516 169 (SOC. D'APPLICATIONS PLASTIQUES, MECANIQUES ET ELECTRONIQUES, PLASTIMECANIQUE) * Insgesamt * | 1,2,6 7,10 | |
| A | GB-A- 745 422 (NEW JERSEY MACHINE CORP.) * Seite 1, Zeile 18 - Seite 4, Zeile 18; Ansprüche; Figuren * | 1,10 | |
| A | DE-B-1 195 663 (W. HAMBURGER, KARTONAGENWERK) * Spalte 1, Zeile 47 - Spalte 4, Zeile 5; Ansprüche; Figuren * | 1,10 | RECHERCHIERTE SACHGEBIETE (Int. Cl. ³) |
| A | DE-A-2 226 255 (ANKER-MASCHINENBAU) * Seite 2, Abschnitt 2 - Seite 9, Abschnitt 1; Ansprüche; Figuren * | 1 | B 29 C 27/00 B 29 C 17/00 B 65 C 3/00 B 65 C 9/00 B 23 P 19/00 |
| A | DE-C- 465 600 (A.G. CARTONNAGEINDUSTRIE) * Ansprüche; Seite 2, Zeilen 68-77; Figur 6 * | 1 | |

--- -/-

Der vorliegende Recherchenbericht wurde für alle Patentansprüche erstellt.

| Recherchenort DEN HAAG | Abschlußdatum der Recherche 03-11-1983 | Prüfer VANHECKE H. |
|---|---|---|

EP   83 10 7740

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 516 242  (C.G. MUNGER) <br> *  Spalte 2, Zeile 38 - Spalte 4, Zeile  48; Ansprüche; Figuren 1-7 * | 1 | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 03-11-1983 | Prüfer VANHECKE H. |
|---|---|---|